# EUROPEAN PATENT APPLICATION

(11) **EP 4 361 818 A1**
(43) Date of publication of application: **01.05.2024**
(21) Application number: 22203893.7
(22) Date of filing: 26.10.2022
(51) Int. Cl.: G06F 11/36, G06F 21/64, G06F 30/33

(54) **GENERATION OF A COMPUTER SIMULATION PACKAGE**

(71) Applicant: Siemens Aktiengesellschaft, 80333 München (DE)
(72) Inventor: Held, Harald, 85461 Bockhorn (DE); Mitra, Sayantan, 700094 Kolkata (IN); Yu, Yan Bin, 200120 Shanghai (CN)
(74) Representative: Siemens Patent Attorneys

(57) **Abstract**

The invention provides a system and computer-implemented method for generating a computer simulation model package for a computer simulation model of a technical system, as well as a computer-implemented method for verifying the computer simulation model. The computer simulation model package comprises a binary file or source code comprising a computer simulation model of the technical system, and a text file assigned to the computer simulation model. A first checksum of the at least one binary file or the source code is derived and stored in the text file. An instantiation function for verifying the computer simulation model is generated, wherein the instantiation function is run each time the computer simulation model is instantiated and wherein the instantiation function comprises the function steps:
- deriving a second checksum from a binary file or source code stored in the computer simulation model package,
- comparing the second checksum with the stored first checksum,
- outputting a comparison result.

## Description

The present invention relates to a system and computer-implemented method for generating a computer simulation model package for a computer simulation model of a technical system, as well as to a data structure for storing a computer simulation model package, and a computer-implemented method for verifying a computer simulation model of a technical system stored in a computer simulation model package, and a computer program product.

In the context of executable Digital Twins, e.g., for industrial systems, simulation models play an important role. Ideally, they are packaged independently from any specific simulation tool and without further dependencies. With FMI (*Functional Mock-up Interface,* https://fmi-standard.org/), there is an open standard that aims to package dynamic models such that they can be exchanged and used in various simulation tools. One such package that follows the FMI standard is called FMU (*Functional Mock-up Unit*). This allows to compose a Digital Twin of multiple, independent models in a co-simulation fashion. However, each individual simulation model may come from a different source, is the result of an export from a simulation tool, and/or a manually coded model package. An FMU typically contains for example text files and binaries compiled to machine code.

Users who want to build up a co-simulation from individual FMUs that come from different sources or manufacturers therefore face the problem that performance of the contained binary libraries may be unknown. For example, users have to trust that the FMU has not been modified by any other party with possibly malicious intentions.

It is therefore an objective of the present invention to provide a computer simulation model package that is trustworthy and/or protected with respect to modifications.

The objective is solved by the features of the independent claims. The dependent claims contain further developments of the invention.

The invention provides according to the first aspect a system for generating a computer simulation model package for a computer simulation model of a technical system,
the system comprising:
a) an input unit configured to provide a data structure for storing the computer simulation model package,
b) a first processing unit configured to store in the data structure:
   - at least a binary file or source code comprising a computer simulation model of the technical system,
      and
   - a text file assigned to the computer simulation model,
c) a computing unit configured to derive a first checksum of the at least one binary file or the source code,
d) a second processing unit configured to store the first checksum in the text file,
e) a generator configured to generate an instantiation function for verifying the computer simulation model, wherein the instantiation function is run each time the computer simulation model is instantiated and wherein the instantiation function comprises the function steps:
   - deriving a second checksum from a binary file or source code stored in the computer simulation model package,
   - comparing the second checksum with the stored first checksum,
   - outputting a comparison result,
f) a third processing unit configured to store the generated instantiation function in the data structure as part of the computer simulation model package,
   and
g) an output unit configured to provide the computer simulation model package.

The invention provides according to the second aspect a computer-implemented method for generating a computer simulation model package for a computer simulation model of a technical system, the method comprising the steps:
a) providing a data structure for storing the computer simulation model package,
b) storing in the data structure
   - at least a binary file or source code comprising a computer simulation model of the technical system,
      and
   - a text file assigned to the computer simulation model,
c) deriving a first checksum of the at least one binary file or the source code,
d) storing the first checksum in the text file,
e) generating an instantiation function for verifying the computer simulation model, wherein the instantiation function is run each time the computer simulation model is instantiated and wherein the instantiation function comprises the function steps:
   - deriving a second checksum from a binary file or source code stored in the computer simulation model package,
   - comparing the second checksum with the stored first checksum,
   - outputting a comparison result,
f) storing the generated instantiation function in the data structure as part of the computer simulation model package, and
g) providing the computer simulation model package.

It is an advantage of the present invention that a computer simulation model package is created that can be trusted since it automatically checks for changes in the computer simulation model/computer-based simulation when instantiating the computer simulation model/computer-based simulation. To this end, a checksum is evaluated that is an integral part of the computer simulation model package itself. The proposed method is therefore safe and reliable.

Furthermore, since the verification check of the computer simulation model is part of the instantiating process, any software tool that is capable of instantiating a computer simulation model out of a computer simulation model package, e.g., a FMU, can be used. Therefore, a simulation tool does not require any modification. Furthermore, the FMI standard does not need to be changed or even adapted to implement the proposed method, rather the generation of the FMU that is adapted.

According to a preferred embodiment of the invention, the computer simulation model package may be a Functional Mock-up Unit (FMU) according to the Functional Mock-up Interface (FMI) standard.

According to a preferred embodiment of the invention, the text file may be an XML-file (Extensible Markup Language file).

It is for example possible to use the file *modelDescription.xml* that is contained in an FMU. Such text file can further comprise various meta information about the packaged computer simulation model.

According to a preferred embodiment of the invention, the checksum may be a cryptographic hash sum.

It is possible to use for example a secure hash algorithm (SHA) for creating the cryptographic hash sum.

The invention provides according to a third aspect a data structure adapted for storing a computer simulation model package for a computer simulation model of a technical system, the data structure comprising:
a) at least a binary file or source code comprising the computer simulation model of the technical system,
b) a text file assigned to the computer simulation model, wherein the text file comprises a first checksum derived from the at least one binary file or source code,
   and
c) an instantiation function, wherein the instantiation function is run each time the computer simulation model is instantiated and wherein the instantiation function comprises the function steps:
   - deriving a second checksum from a binary file or source code stored in the computer simulation model package,
   - comparing the second checksum with the stored first checksum,
   - outputting a comparison result.

The data structure or data format can be embodied on a storage medium or as an electromagnetic signal.

The invention provides according to another aspect a computer-implemented method for verifying a computer simulation model of a technical system stored in a computer simulation model package, comprising the method steps:
a) reading in the computer simulation model package by a processor, wherein the computer simulation model package comprises
   - at least a binary file or source code comprising the computer simulation model of the technical system,
   - a text file assigned to the computer simulation model, wherein the text file comprises a first checksum derived from the at least one binary file or source code,
      and,
   - an instantiation function, wherein the instantiation function is run each time the computer simulation model is instantiated and wherein the instantiation function comprises the function steps:
      - deriving a second checksum from a binary file or source code stored in the computer simulation model package,
      - comparing the second checksum with the stored first checksum,
      - outputting a comparison result,
b) running the instantiation function and returning a comparison result.

This allows checking for changes/modification in the binary file(s) and/or source code(s), i.e., the computer simulation model, when instantiating it. The automatic verification/checking process enhances the reliability of the computer simulation model package.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: shows an embodiment of a system for generating a computer simulation model package for a computer simulation model of a technical system and a data structure for storing a computer simulation model package for a computer simulation model of a technical system;
- Fig. 2:: shows an embodiment of a computer-implemented method for generating a computer simulation model package for a computer simulation model of a technical system; and
- Fig. 3:: shows an embodiment of a computer-implemented method for verifying a computer simulation model of a technical system stored in a computer simulation model package.

Equivalent parts in the different figures are labeled with the same reference signs.

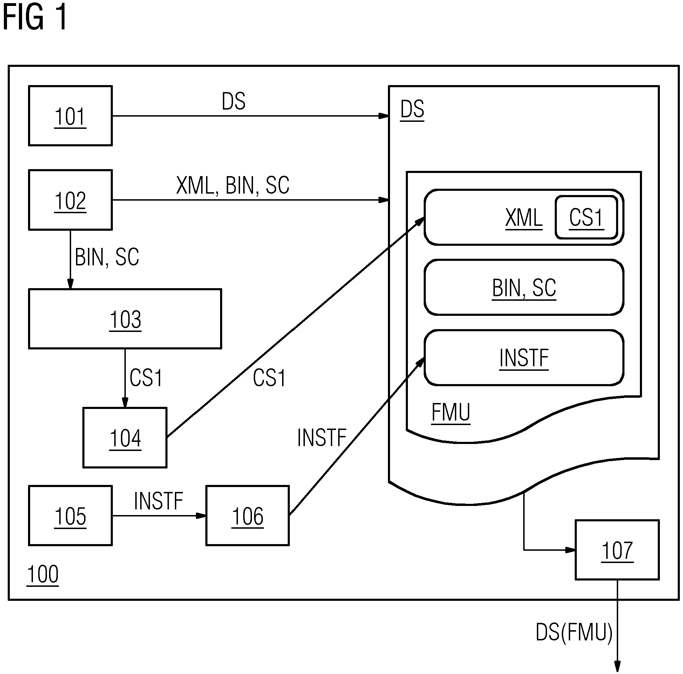

Figure 1 schematically shows an embodiment of a system 100 for generating a computer simulation model package FMU for a computer simulation model of a technical system. Furthermore, a data structure DS for storing a computer simulation model package FMU for a computer simulation model of a technical system is shown.

A technical system can be for example an industrial system, such as a factory, a machine or device, an automation system, or a component thereof. The computer simulation model is for example adapted to simulate a physical performance and/or function of the technical system.

The computer simulation model package can be for example a Functional Mock-up Unit (FMU) following the Functional Mock-up Interface (FMI) standard. For example, the computer simulation package can be stored and provided as a zip-file.

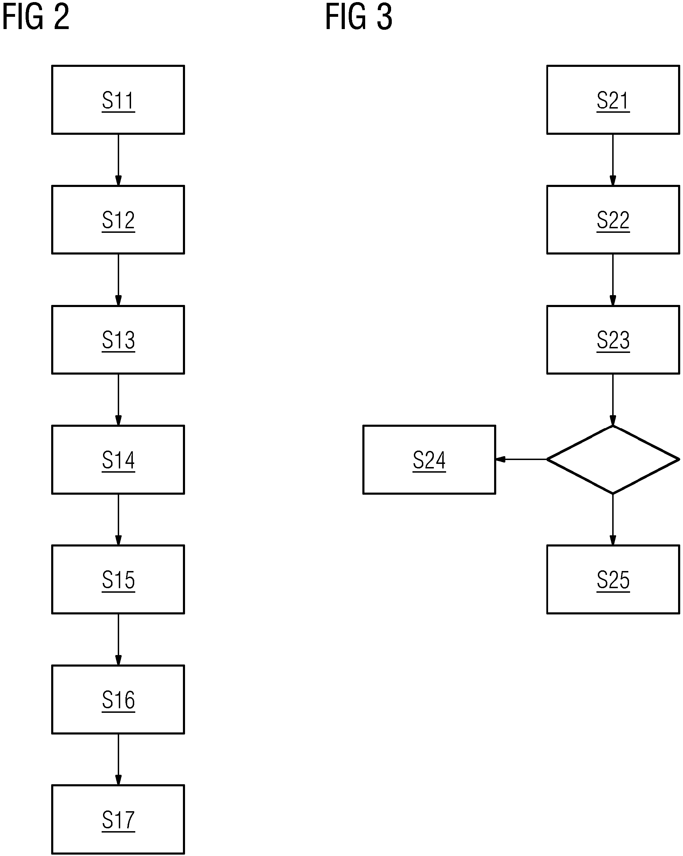

The system 100 comprises an input unit 101, a first processing unit 102, a computing unit 103, a second processing unit 104, a generator 105, a third processing unit 106, and an output unit 107. Furthermore, the system 100 can comprise at least one processor. The system 100 can comprise software and/or hardware components. It is also possible that the first, second and/or third processing unit is combined in one processing unit. The system 100 is in particular adapted to execute a method as shown in Fig. 2.

The input unit 101 is configured to provide a data structure DS for storing the computer simulation model package FMU. The data structure DS can be for example a data folder stored on a computer.

The first processing unit 102 is configured to store data/information in the data structure DS, in particular:
- at least a binary file BIN or source code SC comprising a computer simulation model of the technical system,
   and
- a text file XML assigned to the computer simulation model. The text file can be for example an XML-file.

The computing unit 103 is configured to derive a first checksum CS1, for example a cryptographic hash sum, e.g., SHA-1, of the at least one binary file BIN and/or the source code SC. Therefore, the first checksum CS1 relates to the original computer simulation model stored in the computer simulation model package FMU. Preferably, it is predefined which files of the computer simulation model package FMU are used to derive the first checksum CS1. Such definition can be for example stored in the text file XML. Preferably, the text file itself is not included in the calculation of the first checksum CS1.

The second processing unit 104 is configured to store the first checksum CS1 in the text file XML. Therefore, the text file XML comprises information about the original computer simulation model at time of packaging/generating the computer simulation model package FMU

The generator 105 is configured to generate an instantiation function INSTF for verifying the computer simulation model. Preferably, the instantiation function INSTF is generated for said computer simulation model package FMU. The instantiation function INSFT can then be executed each time the computer simulation model is instantiated. The instantiation function INSTF is stored as part of the computer simulation model package by the third processing unit 106.

The instantiation function INSTF comprises the following function steps:
- deriving a second checksum from a binary file or source code stored in the computer simulation model package, wherein the relevant binary file or source code for deriving the second checksum is preferably predefined in the text file XML of the computer simulation model package FMU,
- comparing the second checksum with the stored first checksum,
- outputting a comparison result.

Therefore, when running the instantiation function INSTF, e.g., each time the computer simulation model is instantiated, a second checksum of the given binary file and/or source code stored in the computer simulation model package is derived. Preferably, the second checksum is derived same binary file and/or source code than the first checksum CS1. However, the binary file and/or source code might have changed in the meantime.

If the binary file BIN or the source code SC, i.e., the computer simulation model, has not been modified, the second checksum is equal to the first checksum CS1. In case of a modification of the binary file BIN or the source code SC, i.e., modification of the computer simulation model, the second checksum differs from the first checksum CS1.

The computer simulation model package FMU therefore comprises a self-verification mechanism that can be executed when instantiating the computer simulation model. The data structure DS comprising the computer simulation model package FMU can then be provided by the output unit 107 of the system 100. The computer simulation model package FMU can then for example be used for controlling and/or monitoring the technical system.

Figure 2 shows as a flowchart an embodiment of the computer-implemented method for generating a computer simulation model package for a computer simulation model of a technical system. The method can be performed by a system as exemplarily shown in Fig. 1.

The method comprises the following method steps:
In a first step S11 a data structure, e.g., a data folder, for storing the computer simulation model package is provided. For example, the data folder is created on a personal computer.

In the next step S12, at least a binary file or source code comprising a computer simulation model of the technical system, and a text file assigned to the computer simulation model, are stored in the data structure. Further metadata of the computer simulation model can be additionally stored in the data structure.

In the next step S13 a first checksum of the at least one binary file or the source code is derived. Then, in the next step S14, the first checksum is stored in the text file.

In the next step S15 an instantiation function is generated. The instantiation function is configured to verify the computer simulation model, that is stored in the computer simulation model package. To this end, the instantiation function is preferably run each time the computer simulation model is instantiated and the instantiation function comprises the function steps:
- deriving a second checksum from a binary file or source code stored in the computer simulation model package,
- comparing the second checksum with the stored first checksum,
- outputting a comparison result.

The second checksum is for example derived from the present source code(s) or binary file(s) stored in the computer simulation model package.

In the next step S16, the generated instantiation function is stored in the data structure as part of the computer simulation model package.

In the next step S17 the computer simulation model package is output/provided.

The computer simulation model package can then for example be used to monitor and/or control the technical system. For example, the computer simulation model can be used to simulate a performance of the technical system and a simulation result can be used to monitor and/or control the technical system. Therefore, the computer simulation model package can be provided to a control unit of the technical system, the package can be read in, the computer simulation model can be instantiated and executed providing a computer simulation result for monitoring and/or controlling the technical system.

Preferably, the computer simulation model package follows the FMI standard, i.e., it is preferably an FMU. Therefore, the generation procedure for an FMU can be also described as follows:
1. instead of hard coding a randomly generated arbitrary string as the instantiation token (https://fmi-standard.org/docs/3.0/#instantiationToken) or GUID, a hash sum of all desired files that make up the FMU is computed and generated into the XML-file *modelDescription.xml.*
2. the generated program code of the instantiation function comprises the steps:
   a. computing the hash for the desired files every time the FMU is instantiated; the temporary file location where the FMU is unpacked to is also given as function argument by the FMI standard.
   b. comparing the computed hash with the previously stored hash from the XML file.
   c. if the two hash values differ, the computer simulation model has been changed, and the FMU should not be further used, otherwise, the FMU can be trusted.

So, the effect of this is that the instantiation of the FMU results in an error if any crucial file has been modified.

Figure 3 shows as a flowchart of an embodiment of a computer-implemented method for verifying a computer simulation model of a technical system stored in a computer simulation model package.

The method comprises the following method steps:

In a first step S21 the computer simulation model package is read in by a processor. The computer simulation model package FMU comprises:
- at least a binary file or source code comprising the computer simulation model of the technical system,
- a text file assigned to the computer simulation model, wherein the text file comprises a first checksum derived from the at least one binary file or source code,
   and,
- an instantiation function, wherein the instantiation function can be run each time the computer simulation model is instantiated and wherein the instantiation function comprises the function steps:
   - deriving a second checksum from a binary file or source code stored in the computer simulation model package,
   - comparing the second checksum with the stored first checksum,
   - outputting a comparison result.

In the next step S22, when loading the computer simulation model package and instantiating the computer simulation model, the instantiation function is executed. Then a second checksum of the currently stored binary file or source code is derived and compared to the first checksum.

In the next step S23 a comparison/check result is provided. In case of a negative comparison/check result, i.e., if the two checksums do not match, step S24, the computer simulation model package has been modified. Preferably a warning/error message is provided to not further use and/or trust the computer simulation model package. In case of a positive comparison/check result, step S25, i.e., if the two checksums are identical, a respective information/data output can be provided that the computer simulation model package has not been modified and can be trusted.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for generating a computer simulation model package (FMU) for a computer simulation model of a technical system,
the system (100) comprising:
a) an input unit (101) configured to provide a data structure (DS) for storing the computer simulation model package (FMU),
b) a first processing unit (102) configured to store in the data structure (DS):
- at least a binary file (BIN) or source code (SC) comprising a computer simulation model of the technical system,
and
- a text file (XML) assigned to the computer simulation model,
c) a computing unit (103) configured to derive a first checksum (CS1) of the at least one binary file (BIN) or the source code (SC),
d) a second processing unit (104) configured to store the first checksum (CS1) in the text file (XML),
e) a generator (105) configured to generate an instantiation function (INSTF) for verifying the computer simulation model, wherein the instantiation function is run each time the computer simulation model is instantiated and wherein the instantiation function (INSTF) comprises the function steps:
- deriving a second checksum from a binary file or source code stored in the computer simulation model package,
- comparing the second checksum with the stored first checksum,
- outputting a comparison result,
f) a third processing unit (106) configured to store the generated instantiation function in the data structure as part of the computer simulation model package,
and
g) an output unit (107) configured to provide the computer simulation model package (FMU).

2. System according to claim 1, wherein the computer simulation model package is a Functional Mock-up Unit according to the Functional Mock-up Interface standard.

3. System according to claim 1 or 2, wherein the text file is an XML-file.

4. System according to one of the preceding claims, wherein the checksum is a cryptographic hash sum.

5. Computer-implemented method for generating a computer simulation model package for a computer simulation model of a technical system, the method comprising the steps:
a) providing (S11) a data structure for storing the computer simulation model package,
b) storing (S12) in the data structure
- at least a binary file or source code comprising a computer simulation model of the technical system,
and
- a text file assigned to the computer simulation model,
c) deriving (S13) a first checksum of the at least one binary file or the source code,
d) storing (S14) the first checksum in the text file,
e) generating (S15) an instantiation function for verifying the computer simulation model, wherein the instantiation function is run each time the computer simulation model is instantiated and wherein the instantiation function comprises the function steps:
- deriving a second checksum from a binary file or source code stored in the computer simulation model package,
- comparing the second checksum with the stored first checksum,
- outputting a comparison result,
f) storing (S16) the generated instantiation function in the data structure as part of the computer simulation model package,
and
g) providing (S17) the computer simulation model package.

6. Data structure (DS) adapted for storing a computer simulation model package (FMU) for a computer simulation model of a technical system, the data structure comprising:
a) at least a binary file (BIN) or source code (SC) comprising the computer simulation model of the technical system,
b) a text file (XML) assigned to the computer simulation model, wherein the text file comprises a first checksum (CS1) derived from the at least one binary file or source code, and
c) an instantiation function (INSTF), wherein the instantiation function is run each time the computer simulation model is instantiated and wherein the instantiation function comprises the function steps:
- deriving a second checksum from a binary file or source code stored in the computer simulation model package,
- comparing the second checksum with the stored first checksum,
- outputting a comparison result.

7. Computer-implemented method for verifying a computer simulation model of a technical system stored in a computer simulation model package (FMU), comprising the method steps:
a) reading (S21) in the computer simulation model package (FMU) by a processor, wherein the computer simulation model package (FMU) comprises
- at least a binary file (BIN) or source code (SC) comprising the computer simulation model of the technical system,
- a text file (XML) assigned to the computer simulation model, wherein the text file comprises a first checksum derived from the at least one binary file or source code,
and,
- an instantiation function (INSTF), wherein the instantiation function is run each time the computer simulation model is instantiated and wherein the instantiation function comprises the function steps:
- deriving a second checksum from a binary file or source code stored in the computer simulation model package,
- comparing the second checksum with the stored first checksum,
- outputting a comparison result,
b) running (S22) the instantiation function (INSTF) and returning a comparison result (S23).

8. Computer program product directly loadable into the internal memory of a digital computer, comprising software code portions for performing the method steps of claims 5 and/or 7 when said computer program product is run on a computer.
